(19) **Europäisches Patentamt / European Patent Office / Office européen des brevets**

(11) **EP 2 579 480 B1**

(12) **EUROPEAN PATENT SPECIFICATION**

(45) Date of publication and mention
of the grant of the patent:
**05.11.2014 Bulletin 2014/45**

(51) Int Cl.:
***H04B 10/07*** *(2013.01)*

(21) Application number: **11306244.2**

(22) Date of filing: **29.09.2011**

(54) **Method of detecting a transmission fault in an optical network**

Verfahren zur Detektion einer Übertragungsfehlers in einem optischen Netzwerk

Procédé pour détection une erreur de transmission dans un réseau optique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.04.2013 Bulletin 2013/15**

(73) Proprietor: **ALCATEL LUCENT
92100 Boulogne-Billancourt (FR)**

(72) Inventors:
 • **Meersman,Stijn
 9250 Waasmunster (Oost-Vlaanderen) (BE)**
 • **Dupuis, Nicolas
 4000 Liege (BE)**

(74) Representative: **Wetzel, Emmanuelle
Alcatel Lucent
Intellectual Property & Standards
70430 Stuttgart (DE)**

(56) References cited:
 **EP-A1- 1 126 635      US-A1- 2009 129 773**

 • **SAN-LIANG LEE ET AL: "Novel fault monitoring
 scheme for PON systems using wavelength
 sweeper and interferometric devices", JOINT
 CONFERENCE OF THE OPTO-ELECTRONICS
 AND COMMUNICATIONS CONFERENCE (OECC)
 AND THE AUSTRALIAN CONFERENCE ON
 OPTICAL FIBRE TECHNOLOGY (ACOFT) - 7-10
 JULY 2008 - SYDNEY, AUSTRALIA, IEEE,
 PISCATAWAY, NJ, USA, 7 July 2008 (2008-07-07),
 pages 1-2, XP031314556, ISBN:
 978-0-85825-807-5**

## Description

## Field of the invention

The invention relates to a method of and a device for detecting a transmission fault in an optical network.

## Background

In optical networks, data signals are transmitted between optical network devices by transmitting optical signals over optical fibers between these optical network devices. An optical fiber may be subject to an impairment, which in turn may result in a degradation of the data transmission, e.g. increased error rate. In order to detect an impairment of the fiber, the signal level of a received optical signal may be monitored.

The document US 2009/0129773 A1 discloses a system, in which an optical line terminal measures a transmitted optical power for a first downstream signal of a first wavelength and also a further transmitted optical power for second downstream signal of a second wavelength. At receiving sides, respective optical network units measure respective received optical signal powers of the respective downstream signals. Using the measured optical powers, respective values of optical signal power loss for the respective downstream signals are determined for detecting a transmission fault.

The document EP 1126635 A1 discloses an optical transmission monitoring apparatus, which measures optical powers of received optical signals having different wavelengths. The apparatus determines a transmission fault in dependence on variation amounts of the optical powers of the different wavelengths.

## Summary

It is an objective, to improve the known method for detecting a transmission fault in an optical network. Proposed is a method of detecting a transmission fault in an optical network. The method comprises different steps.

First measurement data that indicates a first reception level of a first optical signal received at a first optical device is collected. The first optical signal possesses a first wavelength. Furthermore, second measurement data that indicates a second reception level of a second optical signal received at a second optical device is collected. The second optical signal possesses a second wavelength different from the first wavelength.

The reception levels are monitored by monitoring the measurement data. A transmission fault is detected in the case of an attenuation of one or more of the reception levels.

In the case that the transmission fault is detected, a transmission fault type is derived from an attenuation of the reception levels. Information indicating the detected transmission fault type is provided.

In order to grasp the advantages of the proposed method, the following aspects should be taken into consideration.

When transmitting optical signals between optical devices, the optical signals may be subject to signal degradation due to an impairment of one or more optical fibers taking part in the signal transmission. An impairment of one of the fibers may be detected, by monitoring the reception level of one of the received signals and then detecting an attenuation of the monitored reception level. But, such a detected attenuation of a reception level only indicates that there is a fiber impairment in general.

The advantage of the proposed method is that, by deriving a transmission fault type from an attenuation of the reception levels and then providing information indicating the detected transmission fault type, a technician that wants to remove the impairment may take the indicated transmission fault type into account for planning his actions. This may be helpful in order to reduce the amount of time needed for removing the impairment.

## Brief description of the Figures

Figure 1 shows an optical access network.

Figure 2 shows an embodiment of a proposed network sided termination unit of the optical access network.

Figure 3 shows an embodiment of a proposed network monitor.

Figure 4 shows an embodiment of a proposed method for detecting a transmission fault in an optical network.

Figure 5 shows a step of monitoring reception levels.

Figure 6 shows a step of detecting a fault type.

Figure 7 shows a step of detecting an attenuation of a reception level.

## Description of Embodiments

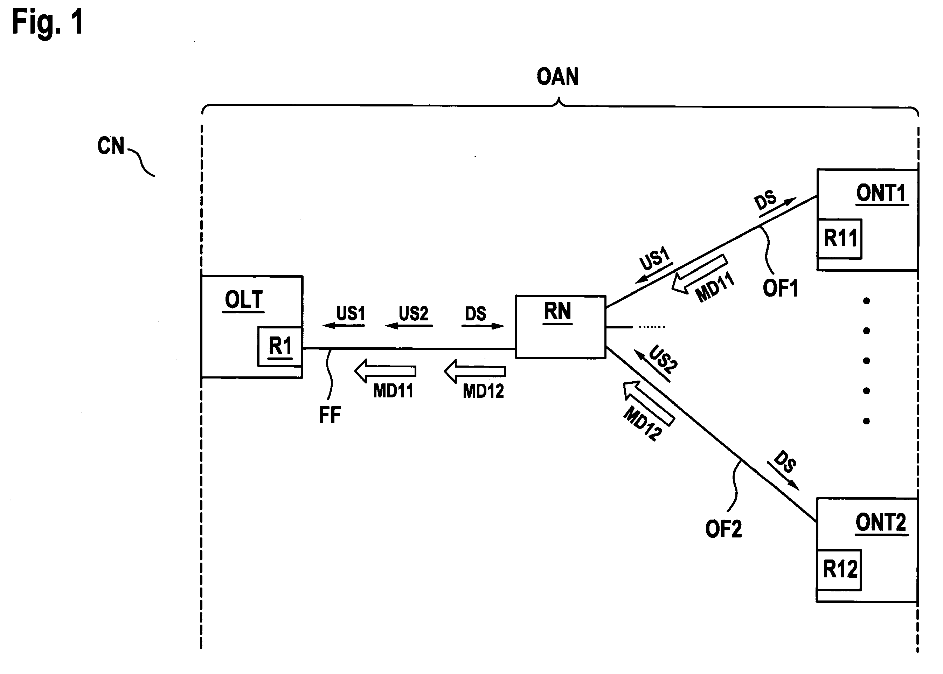

Figure 1 shows an optical access network OAN. The optical access network OAN is preferably a passive optical network (PON).

A network sided termination unit OLT connects the optical access network OAN with a core network CN. The network sided termination unit OLT is preferably an optical line terminal (OLT).

Within the access network, the OLT is connected via an optical fibre FF, preferably called optical feeder fibre, to a remote node RN. The remote node RN may also be called optical distribution node. Over the optical feeder fibre FF, the network sided access network termination unit transmits data in the downstream direction via an optical time division multiplex (TDM) signal DS to the remote node. The optical downstream signal is transmitted at a downstream wavelength $\lambda_{DS}$.

At the remote node, the TDM signal DS transmitted in downstream direction is distributed onto a plurality of optical distribution fibres OF1, OF2. This distribution may be performed in the optical domain by one or more devices acting as an optical splitter device that splits the optical downstream TDM signal DS onto the optical fibres OF1, OF2.

To these optical fibres OF1, OF2, subscriber sided access network termination units, preferably called optical network units (ONU) or optical network terminal (ONT), are connected. Each subscriber is connected to the access network OAN at a subscriber sided access network termination unit. To such a subscriber sided access network termination unit, the subscriber may connect customer premises equipment such as telephones, servers, multimedia devices or other communication devices.

The subscriber sided access network termination units ONT1, ONT2 receive data from devices of the subscribers and transmit this data within timeslots of respective optical upstream TDM signals US1, US2 in the upstream direction towards the remote node. The optical upstream TDM signals US1, US2 are alternatively called optical upstream TDMA signals, wherein TDMA stands for time division multiple access. The optical upstream TDM signals US1, US2 are transmitted at an upstream wavelength $\lambda_{US}$, which is different from the downstream wavelength $\lambda_{DS}$.

At the remote node RN, the upstream TDM signals US1, US2 received from the subscriber sided access network termination units ONT1, ON2 are combined and then transmitted via the optical feeder fibre FF towards the network sided access network termination unit OLT. Such a combination may be performed in the optical domain by a device acting as an optical coupler, which splits signals in the downstream direction and combines signals in the upstream direction.

An allocation of timeslots to the respective subscriber sided access network termination units ONT1, ONT2 for the downstream direction and the upstream direction is negotiated in advance between the subscriber sided access network termination units ONT1, ONT2 and the network sided access network termination unit OLT during a so called ranging process.

For receiving the optical signals DS, US1, US2, the network devices OLT, ONT1, ONT2 contains respective optical receivers R1, R11, R12. Each network device OLT, ONT1, ONT2 measures the signal level of the respective received optical signal and stores data which indicated the respective signal level. The signal level is preferably the power of the received optical signal. The measurements may be performed by an optical analogue-digital converter, not shown explicitly in Figure 1, while the storing may be performed by a memory device, also not shown explicitly in Figure 1. The monitoring of the signal is preferably carried out according to the standard "ITU-T, G.984.2, Amendment 2, Gigabit-capable Passive Optical Networks (G-PON): Physical Media Dependent (PMD) layer specification, (03/2008), Appendix IV, IV.2", briefly called G.984.2.

A user sided network termination unit ONT1, ONT2 measures the signal level of the received downstream signal DS. This measurement is preferably performed over a predefined number of timeslots of the TDM downstream signal.

The network sided termination unit OLT measures the signal level of the received upstream signals US1, US2.

The user sided termination unit ONT1 transmits to the network sided termination unit OLT measurement data MD11, which indicates the reception level of the downstream optical signal DS received at the user sided termination unit ONT1. This transmission of measurement data MD11 is carried out using maintenance messages. These maintenance messages are transmitted within time slots of the TDM downstream signal DS. The maintenance messages are preferably control messages according to an optical network termination management and control interface (OMCI), as defined in "ITU-T, G.984.4, Gigabit-capable Passive Optical Networks (G-PON): ONT management and control interface specification, (02/2008)" in conjunction with "ITU-T, G.984.1, Gigabit-capable passive optical networks (GPON): General characteristics, (03/2008)".

The device OLT may furthermore receive measurement data MD12 from the device ONT2, which indicates the reception level of the downstream signal DS at the device ONT2. The transmission of measurement data MD12 from the device ONT2 to the device OLT may be carried out in a manner that is analogue to the transmission of the measurement data MD11 from the device ONT1 to the device OLT1.

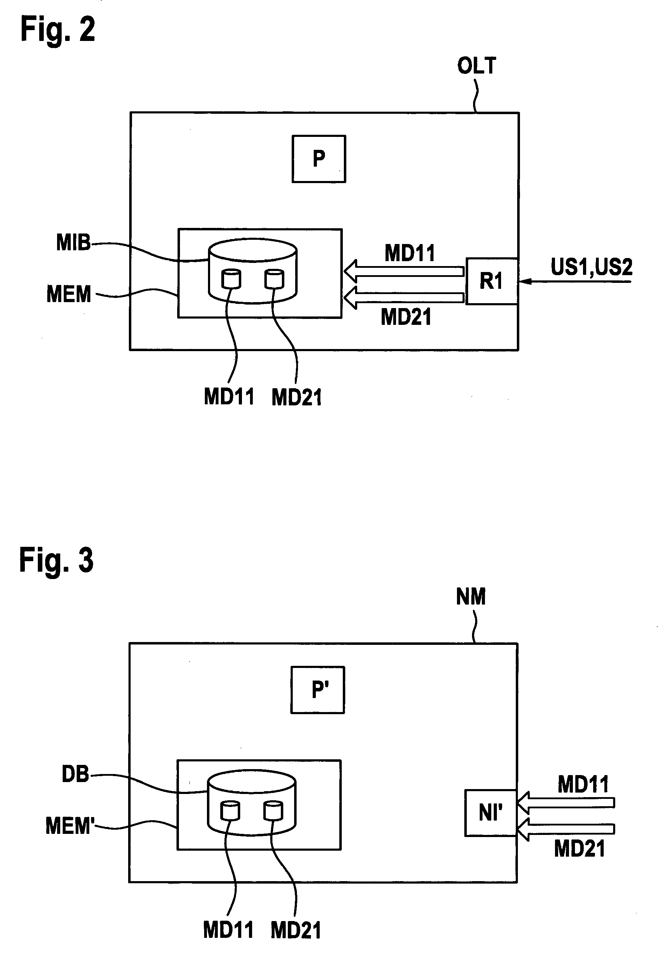

Figure 2 shows an embodiment of a proposed network sided termination unit OLT. The network sided termination unit OLT contains an optical receiver R1, as previously mentioned, which receives the upstream signals US1, US2. Via the previously mentioned maintenance messages, transmitted within the downstream signal DS, the device OLT receives the measurement data MD11. The device OLT stores the measurement data in a memory device MEM. Preferably, the measurement data MD11 is stored within the memory device MEM as a part of a management information base (MIB) containing received OMCI messages.

As previously mentioned, the network sided termination unit OLT measures the signal level of the received upstream signals US1, US2. Preferably, the network sided termination unit OLT measures a respective signal level for the upstream signal US1 received from the user sided network termination unit ONT1. This is done, by measuring the signals received at the receiver R1 for those TDM timeslots, that are allocated to the user sided network termination unit ONT1. From this measured signal US1, the network sided termination unit OLT generates respective measurement data MD21. Furthermore, the network sided termination unit OLT measures the signal level of the received upstream signal US2, in an analogue manner to measuring the signal level of the upstream signal US1, and generates respective measurement data.

Furthermore, the device OLT stores measurement data MD21, which indicates the monitored signal level, within a memory device MEM. Preferably, the device OLT stores the measurement data MD21 as a part of a management information base (MIB) containing OMCI messages. The device OLT may also store measurement data indicating the measured the signal level of the upstream signal US1 in the memory device MEM.

By

- receiving the measurement data MD11,
- generating the measurement data MD21
- and the storing the measurement data MD11, MD21,

the device OLT collects the measurement data MD11, MD21.

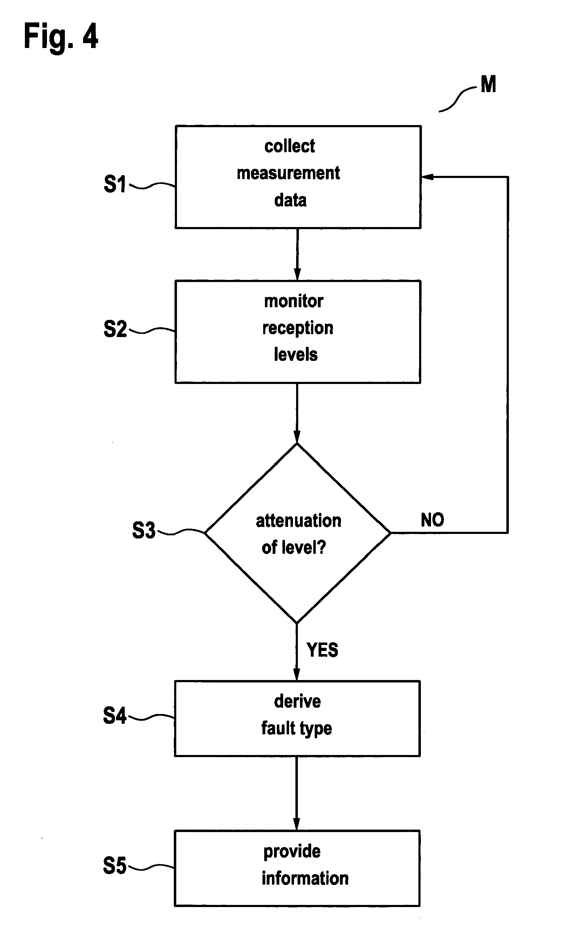

The device OLT contains furthermore a processing unit P, which carries out steps of a method proposed herein and outlined further below with regard to the Figures 4 to 8. By carrying out steps of the proposed method, the device OLT is able to

- monitor the reception level of the upstream signal at the device OLT and the reception level of the downstream signal at the user sided network termination unit, by monitoring the measurement data MD1, MD21,
- detect a transmission fault in the case of an attenuation of one or more of the reception levels, and
- in case of detecting the transmission fault, to derive from an attenuation of the reception levels a transmission fault type and to provide information indicating the detected transmission fault type.

The device OLT may provide the information indicating the detected transmission fault type in the form of display data that is generated by the processing unit P and then provided via a graphical interface to a display unit, such as a computer display or computer screen. For this, the device OLT contains a graphical interface, not explicitly shown in Figure 2. Furthermore, the display unit is preferably an integral part of the device OLT.

Alternatively, the device OLT may provide the information indicating the detected transmission fault type in the form of indication data that indicates the detected transmission fault type. This data may be generated by the processing unit P and then be provided by the device OLT via a network interface to a further device.

For this, the device OLT may contain a network interface, not shown explicitly in Figure 2. The indication data may be sent via a wireless network connection, such as W-LAN or UMTS, or a wirebound network connection, such as a LAN-connection or an Internet connection, by the network interface.

Figure 3 shows an embodiment of a proposed network monitor NM. The network monitor NM contains a network interface NI', via which the network monitor NM receives the previously mentioned measurement data MD11, MD21 from the device OLT. For transmitting the measurement data MD11, MD21, the device OLT may itself contain a network interface. The measurement data MD11, MD21 may be transmitted from the OLT to the network monitor NM via a Simple Network Management Protocol (SNMP) or alternatively using a File Transfer Protocol (xFTP). The network monitor NM may send a configuration file to the OLT, stating for which parameters measurement data shall be transmitted from the OLT to the network monitor NM.

The network monitor NM stores the measurement data MD11, MD21 in a memory device MEM'. Preferably, the device OLT stores the measurement data MD11, MD21 as a part of a data base DB. The database DB contains the measurement data MD11, MD21 preferably in the form of OMCI messages.

By

- receiving the measurement data MD11, MD21,
- and the storing the measurement data MD11, MD21,

the network monitor NM collects the measurement data MD11, MD21.

The network monitor NM contains furthermore a processing unit P', which carries out steps of a method proposed herein and outlined further below with regard to the Figures 4 to 8. By carrying out steps of the proposed method, the network monitor NM is able to

- monitor the reception level of the upstream signal at the device OLT and the reception level of the downstream signal at the user sided network termination unit, by monitoring the measurement data MD1, MD21,
- detect a transmission fault in the case of an attenuation of one or more of the reception levels, and
- in case of detecting the transmission fault, to derive from an attenuation of the reception levels a transmission fault type and to provide information indicating the detected transmission fault type.

The network monitor NM may provide the information indicating the detected transmission fault type in the form of display data that is generated by the processing unit P' and then provided via a graphical interface to a display unit, such as a computer display or computer screen. For this, the network monitor NM contains a graphical interface, not explicitly shown in Figure 3. Furthermore, the display unit is preferably an integral part of the network monitor NM.

Alternatively, the network monitor NM may provide the information indicating the detected transmission fault type in the form of indication data that indicates the detected transmission fault type. This data may be generated by the processing unit P' and then be provided by the network monitor NM via a network interface to a further device. For this, the network monitor NM may use the network interface NI', or another type of network interface. The indication data may be sent via a wireless network connection, such as W-LAN or UMTS, or a wirebound network connection, such as a LAN-connection or an Internet connection, by the network interface.

Figure 4 shows an embodiment of a proposed method M for detecting a transmission fault in an optical network. The method M contains steps for detecting a transmission fault along optical fibers between a network sided termination unit and a user sided termination unit in an optical access network OAN.

Within a step S1, measurement data is collected. In detail, measurement data indicating a reception level of the downstream signal received at the user sided network termination unit is collected, and furthermore measurement data indicating a reception level of the upstream signal received at the network sided network termination unit is collected. The measurement data indicates successive signal levels for successive time instances of measurement.

Within a step S2, the reception levels of the upstream and the downstream signal are monitored, by monitoring the measurement data.

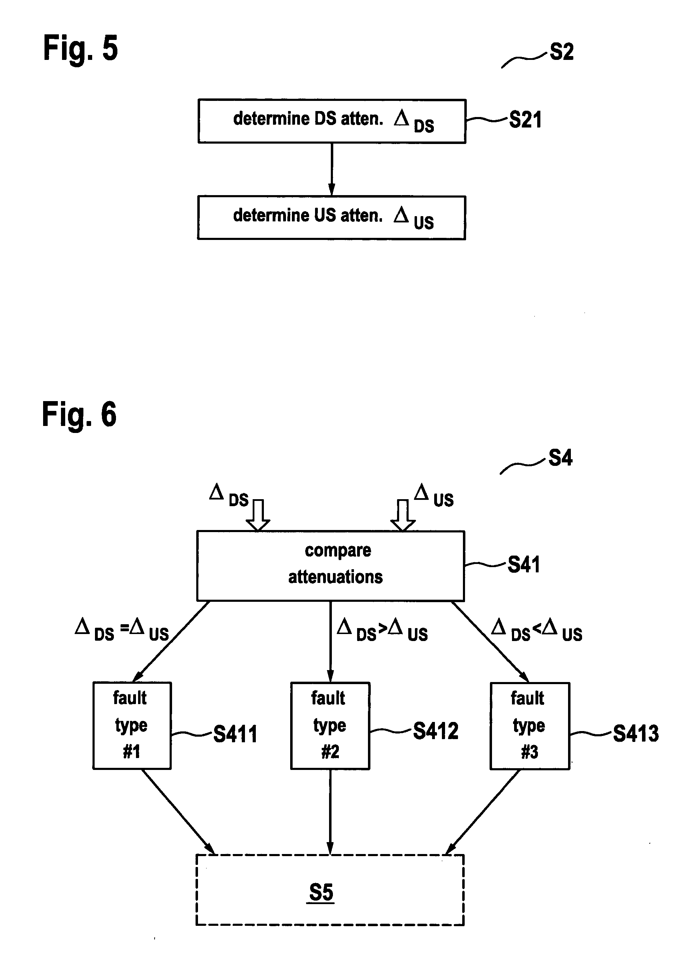

Figure 5 shows the step S2 in detail. Within a substep S21, a possible attenuation $\Delta_{DS}$ of the downstream signal level is determined. This is preferably carried out, by subtracting measurement values of the downstream signal of two successive measurement time instances from each other. For example, the downstream attenuation $\Delta_{DS}$ may be determined using two measurement data values $DS_{t1}$, $DS_{t2}$ of two successive time instances $t1$ and $t2$ as

$$\Delta_{DS} = DS_{t1} - DS_{t2} \ .$$

Preferably, the two successive time instances $t1$ and $t2$ define a time interval that is smaller than or equal to a predefined time interval.

Within a substep 22, a possible attenuation $\Delta_{US}$ of the upstream signal level is determined in a similar manner as for the downstream signal.

Coming back to Figure 2, within a step S3 an optical transmission fault between the network sided termination unit and the user sided termination unit is detected, in the case of an attenuation of at least one of the signal levels. In the case, that no transmission fault is detected within the step S3, the method returns to the step S1 for collecting further measurement data and then also further on monitoring the reception levels. In the case, that a reception level is detected within the step S3, the method proceeds to a step S4.

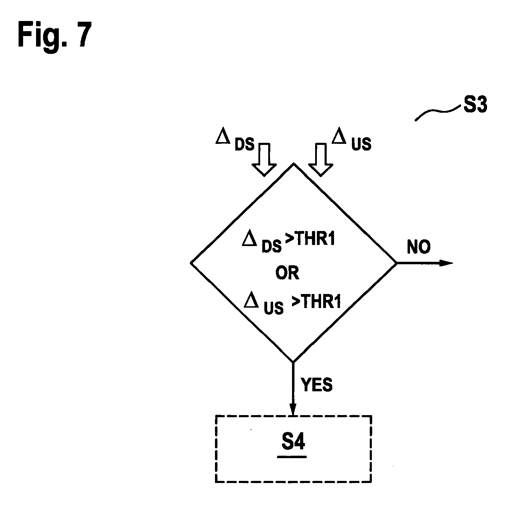

Figure 7 shows the step S3 of detecting an attenuation of a reception level in detail. The values of the downstream attenuation $\Delta_{DS}$ and the upstream attenuation $\Delta_{US}$, which were determined within the step S2, are input values to the step S3. In the case, that one or both of the attenuations $\Delta_{DS}$, $\Delta_{US}$ exceed a predefined threshold THR1, then an optical transmission fault is detected. Thus, the method proceeds from step S3 to the step S4, as indicated in Figure 4. Preferably, the threshold THR1 is chosen to the value THR1 = 1 dB.

The threshold is preferably chosen to the value THR=1 dB In correspondence with the previously mentioned standard G.984.2 Am2, where the repeatability of this measurement has an allowed variation of. If the standard G.984.2 is violated, the threshold is preferably adapted accordingly.

Coming back to Figure 4, in case of detecting a transmission fault within the step S3, a fault type is determined in dependence on the downstream attenuation $\Delta_{DS}$ and the upstream attenuation $\Delta_{US}$.

Figure 6 shows the step S4 in detail. The downstream attenuation $\Delta_{DS}$ and the upstream attenuation $\Delta_{US}$ are used as input values to a step S41, within which the attenuations $\Delta_{DS}$, $\Delta_{US}$ are compared for deriving the fault type. Preferably, the attenuations $\Delta_{DS}$, $\Delta_{US}$ are compared by subtracting one attenuation $\Delta_{US}$ from the other attenuation $\Delta_{DS}$. This yields the attenuation difference

$$\Delta_{LOSS} = \Delta_{DS} - \Delta_{US} \ .$$

It has been observed by the inventors, that optical signals with different wavelengths that are subject to a same impairment of an optical fiber, through which the signals are transmitted, may experience same or different magnitudes of signal attenuations $\Delta_{DS}$, $\Delta_{US}$, depending on the type of the fiber impairment. In fact, it may be differentiated between three types of transmission fault types, equivalent to three types of fiber transmission impairments, wherein

- a first case is an impairment due to which both signals of different wavelengths experience a same attenuation,
- a second case is an impairment due to which the signal with the greater wavelength experiences a greater attenuation than the signal with the smaller wavelength,
- and a third case is an impairment due to which the signal with the greater wavelength experiences a smaller attenuation than the signal with the smaller wavelength.

In the first case, or the first type of transmission fault, the impairment may be a

- dirty contact between at least one fiber and another fiber or another optical component
- or a damaged fiber.

In the second case, or the second type of transmission fault, the impairment may be a bend of an optical fiber.

In the third case, or the third type of transmission fault, the impairment may be a contact misalignment between at least one fiber and another fiber or another optical component.

Thus, since the downstream and the upstream signal possess different wavelengths, it is possible to derive a transmission fault type by comparing the attenuations $\Delta_{DS}$ and $\Delta_{US}$, as shown in step S41 of Figure 6.

It shall be assumed, as non-limiting example, that the wavelength of the downstream signal is greater than the wavelength of the upstream signal.

In the case, that the attenuations $\Delta_{DS}$, $\Delta_{US}$ of both signals with different wavelengths are equal, the method proceeds to the step S411, in which the first type of transmission fault is detected. Preferably, the attenuations $\Delta_{DS}$, $\Delta_{US}$ are assumed to be equal in the case, that the magnitude of the magnitude of the differences of the attenuations $|\Delta_{LOSS}| = |\Delta_{DS} - \Delta_{US}|$ do not exceed a predefined second threshold. This predefined second threshold has a positive value.

In the case, that the attenuation $\Delta_{DS}$ of the signal with the greater wavelength is greater than the attenuation $\Delta_{US}$ of the signal with the smaller wavelength, the method proceeds to the step S412, in which the second type of transmission fault is detected. In other words, if the difference of the attenuations $\Delta_{LOSS} = \Delta_{DS} - \Delta_{US}$ exceeds a predefined third threshold, the method proceeds to the step S412, in which the second type of transmission fault is detected. The predefined third threshold has preferably a positive value that is equal to the positive value of the second threshold.

In the case, that the attenuation $\Delta_{DS}$ of the signal with the greater wavelength is smaller than the attenuation $\Delta_{US}$ of the signal with the smaller wavelength, the method proceeds to the step S413, in which the third type of transmission fault is detected. In other words, if the difference of the attenuations $\Delta_{LOSS} = \Delta_{DS} - A_{US}$ exceeds a predefined fourth threshold, the method proceeds to the step S413, in which the third type of transmission fault is detected. The predefined fourth threshold has preferably a negative values whose magnitude is equal to the positive value of the second threshold.

From each of the steps S41 1, S412, S413, the method proceeds to the step S5.

Within the step S5, information data indicating the detected type of transmission fault is provided, as it has been previously outlined with regard to the Figures 2 and 3.

Preferably, the devices OLT and/or NM shown in the Figures 2 and 3 provide also information data that indicates an identification data of the user sided termination unit that was involved into the transmission and measurement of signals. The identification data may be a device number or a port number to which the user sided termination unit is connected. By being provided with such identification data of the involved user sided termination unit, a technician may plan actions for removing the transmission fault more precisely.

The identification data of the user sided termination unit may be received from the maintenance messages previously mentioned and then stored together with the measurement data MD11 in a memory.

In order to detect a transmission fault more precisely, the measurement data may include measurement values indicating temperatures at the network sided termination unit and the user sided termination unit are taken into account.

Measurement data indicating a temperature of the receiver of the network sided termination unit is collected. Furthermore, measurement data indicating a temperature of the receiver of the user sided network termination unit is collected.

The temperatures are monitored, by monitoring the collected measurement data of the temperatures.

A detection of the transmission fault is not carried out, in the case that one or both ot the temperatures changes by more than a temperature change threshold for the relevant measurement time instances $t1$ and $t2$. Due to the fact, that a temperature change may lead to a measured attenuation of reception level of an optical signal without a fiber impairment being present, the detection of a transmission fault is carried out more reliably by taking into a temperature change at the involved network devices.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Figures 1, 2 or 3, including any functional blocks labeled as "processing units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processing unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. Method of detecting a transmission fault in an optical network, comprising

- collecting first measurement data (MD21) indicating a first reception level of a first optical signal (US1), possessing a first wavelength and received at a first optical device (OLT),
- collecting second measurement data (MD11) indicating a second reception level of a second optical signal (DS), possessing a second wavelength different from said first wavelength and received at a second optical device (ONT1),
- monitoring said first and said second reception level by monitoring said first and said second measurement data (MD21, MD11),
- detecting said transmission fault in the case of an attenuation of said first or said second reception level,
- in case of detecting said transmission fault, deriving from an attenuation of said first reception level and an attenuation of said second reception level a transmission fault type and providing information indicating the detected transmission fault type

**characterized by**

- collecting third measurement data indicating a temperature of a receiver of said first optical device (OLT),
- collecting fourth measurement data indicating a temperature of a receiver of said second optical device (ONT1),
- monitoring said temperatures by monitoring said third and said fourth measurement data,
- not detecting said transmission fault in the case that one of said temperatures changes by more than a temperature change threshold.

2. Method according to claim 1, comprising furthermore

- determining said attenuation of said first reception level,
- determining said attenuation of said second reception level,
- deriving said transmission fault type, by determining said transmission fault type in dependence on said attenuation of said first reception level and said attenuation of said second reception level.

3. Method according to claim 2, wherein said transmission fault type is derived by determining a difference between said attenuations of said reception levels.

4. Method according to any of the claims 1 to 3, wherein said transmission fault is detected in the case that an attenuation of said first or said second reception level exceeds a predefined threshold.

5. Method according to claim 3, wherein said transmission fault type is furthermore derived by comparing said difference between said attenuations with a second predefined threshold.

**6.** Method according to any of the preceding claims, wherein said network is an optical access network (OAN).

**7.** Method according to claim 6, wherein said first optical device is a network sided termination unit (OLT) of said optical access network (OAN), and wherein said second optical device is a user sided termination unit (ONT1) of said optical access network (OAN).

**8.** Method according to any of the preceding claims, comprising furthermore

- detecting said transmission fault in the case of said attenuation of said first or said second reception level occurs within a predefined time interval.

**9.** Device (OLT, NM) for detecting a transmission fault in an optical network (OAN), wherein said device (OLT, NM) is adapted to

- collect first measurement data (MD21) indicating a first reception level of a first optical signal (US1), possessing a first wavelength and received at a first optical device (OLT),
- collect second measurement data (MD11) indicating a second reception level of a second optical signal (DS), possessing a second wavelength different from said first wavelength and received at a second optical device (ONT1),
- monitor said first and said second reception level by monitoring said first and said second measurement data (MD21, MD11),
- detect said transmission fault in the case of an attenuation of said first or said second reception level,
- in case of detecting said transmission fault, deriving from an attenuation of said first reception level and an attenuation of said second reception level a transmission fault type and providing information indicating the detected transmission fault type.

**characterized in that** said device is furthermore adapted to

- collect third measurement data indicating a temperature of a receiver of said first optical device (OLT),
- collect fourth measurement data indicating a temperature of a receiver of said second optical device (ONT1),
- monitor said temperatures by monitoring said third and said fourth measurement data,
- not detect said transmission fault in the case that one of said temperatures changes by more than a temperature change threshold.

**10.** A computer program for detecting a transmission fault in an optical network (OAN), wherein said computer program, when executed on a computer, causes the computer to perform the steps of the method according to claim 1.

**11.** A computer program product for detecting a transmission fault in an optical network (OAN), comprising a computer usable medium having a computer readable program, wherein said computer readable program, when executed on a computer, causes the computer to perform the steps of the method according to claim 1.

**Patentansprüche**

**1.** Verfahren zum Erkennen eines Übertragungsfehlers in einem optischen Netzwerk, umfassend:

- Erfassen von ersten Messdaten (MD21), die einen ersten Empfangspegel eines ersten optischen Signals (US1), welches eine erste Wellenlänge aufweist und an einer ersten optischen Vorrichtung (OLT) empfangen wird, anzeigen,
- Erfassen von zweiten Messdaten (MD11), die einen zweiten Empfangspegel eines zweiten optischen Signals (DS), welches eine zweite Wellenlänge, die sich von der besagten ersten Wellenlänge unterscheidet, aufweist und an einer zweiten optischen Vorrichtung (ONT1) empfangen wird, anzeigen,
- Überwachen des besagten ersten und des besagten zweiten Empfangspegels durch Überwachen der besagten ersten und der besagten zweiten Messdaten (MD21, MD11),
- Erkennen des besagten Übertragungsfehlers im Fall einer Dämpfung des besagten ersten oder des besagten zweiten Empfangspegels,
- Im Fall des Erkennens des besagten Übertragungsfehlers, Ableiten, von einer Dämpfung des besagten ersten Empfangspegels und einer Dämpfung des besagten zweiten Empfangspegels, einer Übertragungsfehlerart, und Bereitstellen von Informationen, welche die erkannte Übertragungsfehlerart angeben,

**gekennzeichnet durch**

- Erfassen von dritten Messdaten, welche einer Temperatur eines Empfängers der besagten ersten optischen Vorrichtung (OLT) anzeigen,
- Erfassen von vierten Messdaten, welche einer Temperatur eines Empfängers der besagten zweiten optischen Vorrichtung (ONT1) anzeigen,
- Überwachen der besagten Temperaturen **durch** Überwachen der besagten dritten und der besagten vierten Messdaten,
- Nichterkennen des besagten Übertragungsfehlers, wenn sich eine der besagten Temperaturen um mehr als eine Temperaturänderungsschwelle verändert.

2. Verfahren nach Anspruch 1,
weiterhin umfassend:

- Ermitteln der besagten Dämpfung des besagten ersten Empfangspegels,
- Ermitteln der besagten Dämpfung des besagten zweiten Empfangspegels,
- Ableiten der besagten Übertragungsfehlerart durch Ermitteln der besagten Übertragungsfehlerart in Abhängigkeit von der besagten Dämpfung des besagten ersten Empfangspegels und der besagten Dämpfung des besagten zweiten Empfangspegels.

3. Verfahren nach Anspruch 2,
wobei die besagte Übertragungsfehlerart durch Ermitteln einer Differenz zwischen den besagten Dämpfungen der besagten Empfangspegel abgeleitet wird.

4. Verfahren nach den Ansprüchen 1 bis 3,
wobei der besagte Übertragungsfehler erkannt wird, wenn eine Dämpfung des besagten ersten oder des besagten zweiten Empfangspegels einen vordefiniert Grenzwert überschreitet.

5. Verfahren nach Anspruch 3,
wobei die besagte Übertragungsfehlerart weiterhin durch Vergleichen der besagten Differenz zwischen den besagten Dämpfungen mit einem zweiten vordefinierten Grenzwert abgeleitet wird.

6. Verfahren nach einem beliebigen der vorstehenden Ansprüche,
wobei das besagte Netzwerk ein optisches Zugangsnetzwerk (OAN) ist.

7. Verfahren nach Anspruch 6,
wobei die besagte erste optische Vorrichtung eine netzwerkseitige Abschlusseinheit (OLT) des besagten optischen Zugangsnetzwerk (OAN) ist, und wobei die besagte zweite optische Vorrichtung eine benutzerseitige Abschlusseinheit (ONT1) des besagten optischen Zugangsnetzwerks (OAN) ist.

8. Verfahren nach einem beliebigen der vorstehenden Ansprüche,
weiterhin umfassend:

- Erkennen des besagten Übertragungsfehlers, wenn die besagte Dämpfung des besagten ersten oder des besagten zweiten Empfangspegels innerhalb eines vordefinierten Zeitintervalls auftritt.

9. Vorrichtung (OLT, NM) zum Erkennen eines Übertragungsfehlers in einem optischen Netzwerk (OAN), für Folgendes ausgelegt:

- Erfassen von ersten Messdaten (MD21), die einen ersten Empfangspegel eines ersten optischen Signals (US2), welches eine erste Wellenlänge aufweist und an einer ersten optischen Vorrichtung (OLT) empfangen wird, anzeigen,
- Erfassen von zweiten Messdaten (MD11), die einen zweiten Empfangspegel eines zweiten optischen Signals (DS), welches eine zweite Wellenlänge, die sich von der besagten ersten Wellenlänge unterscheidet, aufweist und an einer zweiten optischen Vorrichtung (ONT1) empfangen wird, anzeigen,
- Überwachen des besagten ersten und des besagten zweiten Empfangspegels durch Überwachen der besagten ersten und der besagten zweiten Messdaten (MD21, MD11),
- Erkennen des besagten Übertragungsfehlers im Fall einer Dämpfung des besagten ersten oder des besagten zweiten Empfangspegels,
- Im Fall des Erkennens des besagten übertragungsfehlers, Ableiten, von einer Dämpfung des besagten ersten Empfangspegels und einer Dämpfung des besagten zweiten Empfangspegels, einer Übertragungsfehlerart, und Bereitstellen von Informationen, welche die erkannte Übertragungsfehlerart angeben,

**dadurch gekennzeichnet, dass** die besagte Vorrichtung weiterhin für Folgendes ausgelegt ist:

- Erfassen von dritten Messdaten, welche einer Temperatur eines Empfängers der besagten ersten optischen Vorrichtung (OLT) anzeigen,
- Erfassen von vierten Messdaten, welche einer Temperatur eines Empfängers der besagten zweiten optischen Vorrichtung (ONT1) anzeigen,
- Überwachen der besagten Temperaturen durch Überwachen der besagten dritten und der besagten vierten Messdaten,
- Nichterkennen des besagten Übertragungsfehlers, wenn sich eine der besagten Temperaturen um mehr als eine Temperaturänderungsschwelle verändert.

10. Computerprogramm zum Erkennen eines Übertragungsfehlers in einem optischen Netzwerk (OAN), wobei das besagte Computerprogramm bei dessen Ausführung auf einem Computer bewirkt, dass der Computer die Schritte des Verfahrens gemäß Anspruch 1 durchführt.

11. Computerprogramm-Produkt zum Erkennen eines Übertragungsfehlers in einem optischen Netzwerk (OAN), umfassend eine computernutzbares Medium mit einem computerlesbaren Programm, wobei das besagte computerlesbare Programm bei dessen Ausführung auf einem Computer bewirkt, dass der Computer die Schritte des Verfahrens gemäß Anspruch 1 durchführt.

**Revendications**

1. Procédé de détection d'une panne de transmission dans un réseau optique, comprenant les étapes suivantes

- collecter des premières données de mesure (MD21) indiquant un premier niveau de réception d'un premier signal optique (US1), possédant une première longueur d'onde et reçu au niveau d'un premier dispositif optique (OLT),
- collecter des deuxièmes données de mesure (MD11) indiquant un deuxième niveau de réception d'un deuxième signal optique (US1), possédant une deuxième longueur d'onde différente de ladite première longueur d'onde et reçu au niveau d'un deuxième dispositif optique (ONT1),
- surveiller ledit premier et ledit deuxième niveaux de réception en surveillant lesdites premières et lesdites deuxièmes données de mesure (MD21, MD11),
- détecter ladite panne de transmission en cas d'atténuation dudit premier ou dudit deuxième niveau de réception,
- en cas de détection de ladite panne de transmission, déduire d'une atténuation dudit premier niveau de réception et d'une atténuation dudit deuxième niveau de réception un type de panne de transmission et fournir des informations indiquant le type de panne de transmission détecté

**caractérisé par** les étapes suivantes

- collecter des troisièmes données de mesure indiquant une température d'un récepteur dudit premier dispositif optique (OLT),
- collecter des quatrièmes données de mesure indiquant une température d'un récepteur dudit deuxième dispositif optique (ONT1),
- surveiller lesdites températures en surveillant lesdites troisièmes et lesdites quatrièmes données de mesure,
- ne pas détecter ladite panne de transmission au cas où une desdites températures varierait de plus d'un seuil de variation de température.

2. Procédé selon la revendication 1, comprenant en outre les étapes suivantes

- déterminer ladite atténuation dudit premier niveau de réception,
- déterminer ladite atténuation dudit deuxième niveau de réception,
- déduire ledit type de panne de transmission, en déterminant ledit type de panne de transmission en fonction de ladite atténuation dudit premier niveau de réception et de ladite atténuation dudit deuxième niveau de réception.

3. Procédé selon la revendication 2, dans lequel ledit type de panne de transmission est déduit en déterminant une différence entre lesdites atténuations desdits niveaux de réception.

4. Procédé selon l'une quelconque des revendications 1 à 3, dans lequel ladite panne de transmission est détectée au cas où une atténuation dudit premier ou dudit deuxième niveau de réception dépasserait un seuil prédéfini.

5. Procédé selon la revendication 3, dans lequel ledit type de panne de transmission est en outre déduit en comparant à un deuxième seuil prédéfini ladite différence entre lesdites atténuations.

6. Procédé selon l'une quelconque des revendications précédentes, dans lequel ledit réseau est un réseau d'accès optique (OAN).

7. Procédé selon la revendication 6, dans lequel ledit premier dispositif optique est une unité de terminaison côté réseau (OLT) dudit réseau d'accès optique (OAN), et dans lequel ledit deuxième dispositif optique est une unité de terminaison côté utilisateur (ONT1) dudit réseau d'accès optique (OAN).

8. Procédé selon l'une quelconque des revendications précédentes, comprenant en outre l'étape suivante

- détecter ladite panne de transmission au cas où ladite atténuation dudit premier ou dudit deuxième niveau de réception se produirait dans un intervalle de temps prédéfini.

9. Dispositif (OLT, NM) pour détecter une panne de transmission dans un réseau optique (OAN), ledit dispositif (OLT, NM) étant adapté pour

- collecter des premières données de mesure (MD21) indiquant un premier niveau de réception d'un premier signal optique (US1), possédant une première longueur d'onde et reçu au niveau d'un premier dispositif optique (OLT),
- collecter des deuxièmes données de mesure (MD11) indiquant un deuxième niveau de réception d'un deuxième signal optique (DS), possédant une deuxième longueur d'onde différente de ladite première longueur d'onde et reçu au niveau d'un deuxième dispositif optique (ONT1),
- surveiller ledit premier et ledit deuxième niveaux de réception en surveillant lesdites premières et lesdites deuxièmes données de mesure (MD21, MD11),
- détecter ladite panne de transmission en cas d'atténuation dudit premier ou dudit deuxième niveau de réception,
- en cas de détection de ladite panne de transmission, déduire d'une atténuation dudit premier niveau de réception et d'une atténuation dudit deuxième niveau de réception un type de panne de transmission et fournir des informations indiquant le type de panne de transmission détecté

**caractérisé en ce que** ledit dispositif est en outre adapté pour

- collecter des troisièmes données de mesure indiquant une température d'un récepteur dudit premier dispositif optique (OLT),
- collecter des quatrièmes données de mesure indiquant une température d'un récepteur dudit deuxième dispositif optique (ONT1),
- surveiller lesdites températures en surveillant lesdites troisièmes et lesdites quatrièmes données de mesure,
- ne pas détecter ladite panne de transmission au cas où une desdites températures varierait de plus d'un seuil de variation de température.

10. Programme informatique pour détecter une panne de transmission dans un réseau optique (OAN), dans lequel ledit programme informatique, lorsqu'il est exécuté sur un ordinateur, entraîne l'exécution par l'ordinateur des étapes du procédé selon la revendication 1.

11. Produit de programme informatique pour détecter une panne de transmission dans un réseau optique (OAN), comprenant un support lisible par ordinateur présentant un programme lisible par ordinateur, dans lequel ledit programme lisible par ordinateur, lorsqu'il est exécuté sur un ordinateur, entraîne l'exécution par l'ordinateur des étapes du procédé selon la revendication 1.

**Fig. 1**

EP 2 579 480 B1

# Fig. 2

# Fig. 3

# Fig. 4

# Fig. 5

~S2

determine DS atten. $\Delta_{DS}$ ~S21

determine US atten. $\Delta_{US}$

# Fig. 6

~S4

$\Delta_{DS}$ $\Delta_{US}$

compare attenuations ~S41

$\Delta_{DS} = \Delta_{US}$     $\Delta_{DS} > \Delta_{US}$     $\Delta_{DS} < \Delta_{US}$

fault type #1 ~S411

fault type #2 ~S412

fault type #3 ~S413

S5

# Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090129773 A1

- EP 1126635 A1